# EUROPEAN PATENT SPECIFICATION

(11) **EP 2 772 619 B1**
(45) Date of publication and mention of the grant of the patent: **06.12.2017**
(21) Application number: 12844299.3
(22) Date of filing: 22.10.2012
(51) Int. Cl.: F01K 23/10, B63B 25/16, B63J 3/04, F01K 23/06, F02C 3/22, F02C 6/18, F02C 7/143, F02C 7/18, F02C 7/22, F02C 9/18, F02C 9/28, F02C 9/40, F22B 1/22, F01D 15/00, F02C 9/46, F22B 1/18

(54) **LIQUEFIED GAS TREATMENT SYSTEM AND CONTROL METHOD THEREFOR**
FLÜSSIGGASBEHANDLUNGSSYSTEM UND STEUERVERFAHREN DAFÜR
SYSTÈME DE TRAITEMENT DE GAZ LIQUÉFIÉ ET PROCÉDÉ DE COMMANDE POUR CE SYSTÈME

(30) Priority: 24.10.2011 JP 2011232734
(43) Date of publication of application: 03.09.2014
(73) Proprietor: Mitsubishi Heavy Industries, Ltd., Tokyo 108-8215 (JP)
(72) Inventor: OKA, Masaru, Tokyo 108-8215 (JP)
(74) Representative: Henkel, Breuer & Partner
(86) International application number: PCT/JP2012/077247
(87) International publication number: WO 2013/061928

(56) References cited:
- EP-A1- 2 072 609
- EP-A1- 2 075 438
- WO-A1-2008/139535
- JP-A- H03 134 207
- JP-A- H05 113 108
- JP-A- H08 246 899
- JP-A- S58 148 208
- JP-A- S62 255 506
- JP-A- 2008 082 247
- JP-A- 2010 196 606
- JP-A- 2010 196 606
- JP-A- 2010 522 109
- US-A- 4 380 147
- US-A- 4 660 375
- US-A1- 2009 215 328

## Description

### {Technical Field}

The present invention relates to a liquefied gas disposal system according to claim 1, a control method according to claim 9 therefor, a liquefied gas carrier provided therewith, and a liquefied gas storage facility provided therewith, and particularly to disposal of liquefied gas which has become surplus and is vaporized.

### {Background Art}

Generally, in a storage vessel which stores liquefied gas such as liquefied natural gas and liquefied petroleum gas in a liquid state (hereafter, referred to as a "cargo tank"), a certain measure is taken to prevent an increase in the pressure in the cargo tank by reliquefying the liquefied gas, which has spontaneously evaporated from the liquefied gas stored in the cargo tank by heat input from the outside (hereafter, referred to as "boil-off gas"), with a reliquefier, or by combusting the boil-off gas as a fuel for a motor etc.

To prepare for the cases where the aforementioned reliquefier is out of operation, and where boil-off gas is generated more than the amount to be used as the fuel for the motor, a gas combustion boiler or a gas incinerator etc. for combusting the surplus boil-off gas is provided (for example, Patent Literature 1).

In a gas combustion apparatus such as the aforementioned gas combustion boiler and gas incinerator, there are two cases where the total amount of boil-off gas is combusted, and where a small amount of the boil-off gas that is generated from a reliquefier etc. is combusted. For that reason, the gas combustion apparatus is required to have a wide range of combustion load, and a high reliability as a method for preventing pressure increase in the cargo tank.

In such a gas combustion boiler and a gas incinerator, boil-off gas is mixed with combustion air under a substantially atmospheric pressure, and thereafter the boil-off gas is combusted by forcibly igniting it with a fire source based on oil or an electric spark. The flue gas generated by this combustion is discharged to outside through a funnel etc. as safe incombustible gas.

### {Citation List}

### {Patent Literature}

{PTL 1}
   Japanese Unexamined Patent Application, Publication No. 2007-1339
{PTL 2}
   Japanese Unexamined Patent Application, Publication No. 2006-200885
{PTL 3}
   Japanese Unexamined Patent Application, Publication No. 2007-23976

### {Summary of Invention}

### {Technical Problem}

However, in selecting the piping material constituting a flue, to which flue gas discharged from a gas combustion boiler or a gas incinerator is led, the flue gas desirably has a low temperature in the viewpoint of high-temperature resistance. In the case of a gas combustion boiler, heat exchange with water (steam) is conducted to generate steam which is often demanded for uses, and by appropriately planning the heat exchange, the temperature of the flue gas to be discharged is decreased to a predetermined temperature.

On the other hand, in the case of a gas incinerator, the temperature of the flue gas is suppressed by admixing combustion air with dilution air to increase an air excess ratio (ratio between the amount of air to be led to the furnace and the amount of combustion air). That is, in the case of the gas incinerator, since there is no temperature decreasing mechanism by heat exchange after combustion, in contrast to the gas combustion boiler, a problem exists in that the furnace itself increases in size, making it difficult to secure an installation space therefor.

Moreover, in both the gas combustion boiler and the gas incinerator, since the boil-off gas is combusted under an atmospheric pressure, the size of flame is large compared with in pressurized combustion, and therefore a larger furnace is required, which is another factor to increase the size of the apparatus itself.

Furthermore, although Patent Literature 2 discloses the reduction of the volume of a buffer tank which constitutes a part of a gas incinerator apparatus, it does not disclose the reduction of the size of the furnace in a gas combustion boiler and a gas incinerator for combusting vaporized liquefied gas.

Moreover, although Patent Literature 3 discloses about efficient use and recovery of the energy of the flue gas (circulating gas) which circulates in a gas turbine power generator, it does not disclose the reduction of the size of the heat recovery boiler.

Furthermore, in the case of shipping, since an electric air fan which is electrically powered by inboard electric power etc. is generally used when feeding combustion air and/or dilution air into the furnace of a gas combustion boiler or a gas incinerator, there may be a case where the continuous operation of the gas combustion apparatus is disabled by a shutdown of the inboard electric power supply, thus affecting the reliability of the gas disposal apparatus itself. For that reason, there is sometimes need of taking into consideration an excessive redundancy for the power supply system to be provided in shipping.

The present invention has been made in view of the above-described circumstances, and has its object to provide a liquefied gas disposal according to claim 1 which is able to treat the liquefied gas, which has become surplus and is vaporized, in a compact and effective manner, a control method according to claim 9 therefor, a liquefied gas carrier provided therewith, and a liquefied gas storage facility provided therewith.

### {Solution to Problem}

In order to solve the above-described problems, a liquefied gas disposal system, a control method therefor, a liquefied gas carrier provided therewith, and a liquefied gas storage facility provided therewith adopt the following means.

A liquefied gas disposal system relating to a first aspect of the present invention comprises: a compression means for compressing ambinent air; a pressurized combustion means including: a furnace into which ambinent air compressed by the compression means is led as jacket air and combustion air and in which vaporized liquefied gas led out from a storage vessel combusts with the combustion air, and a jacket part which covers a surrounding of a furnace wall constituting the furnace and into which the jacket air is led; a high-pressure-side steam generation means for generating steam through heat exchange with the flue gas led out from the pressurized combustion means; a steam turbine to which the steam generated in the high-pressure-side steam generation means is led; and a gas turbine which is provided on a common shaft with the compression means, and is driven by the flue gas led from the high-pressure-side steam generation means.

Conventionally, when liquefied gas in a liquid state stored in a storage vessel, which is mounted on shipping for carrying liquefied gas in a liquid state or equipped in a storage facility, is vaporized (boiled off), the boil-off gas (vaporized liquefied gas) is used as the fuel for a propulsion motor or is reliquefied to be returned to the storage vessel. When the boil-off gas cannot be used as the fuel for the propulsion motor and cannot be reliquefied as described above, or when further surplus gas is generated, the boil-off gas is led to and combusted in a liquefied gas disposal system having a gas combustion boiler or a gas combustion furnace. However, in this gas combustion boiler and gas combustion furnace, the size of flame becomes larger due to atmospheric pressure combustion so that the size of the furnace itself increases. For that reason, there is a demand for reducing the size of the liquefied gas disposal system.

Accordingly, in the present invention, it is configured such that a gas turbine, which is rotated by flue gas generated by combusting vaporized liquefied gas by using the pressurized combustion means, is used to drive the compression means which is provided on the common shaft therewith so that the compressed air is led to the pressurized combustion means as jacket air and combustion air of the pressurized combustion means. This makes it possible to decrease the size of the furnace itself of the pressurized combustion means. Furthermore, in the present invention, since pressurized combustion can be used as the combustion condition for combusting vaporized liquefied gas generated in the storage vessel, it is possible to increase the density of the flue gas that passes through the flue, and thereby suppress the size of the flue, compared with the case of a conventional liquefied gas disposal system including a gas combustion boiler and a gas combustion furnace, which are based on atmospheric pressure combustion. In addition to that, it is possible to reduce the size of the high-pressure-side steam generation means for performing heat exchange with the flue gas, compared with that for atmospheric pressure flue gas. Thus, the liquefied gas disposal system can be made compact.

Furthermore, by using the high-pressure-side steam generation means of a reduced size and the pressurized combustion means in which the furnace is covered with the jacket air, radiated heat from the furnace is cooled by air, making it possible to reduce an area of heat insulation work for the furnace and the flue, and suppress heat radiation loss from the same area.

Furthermore, flue gas which has passed through the high-pressure-side steam generation means, thereby being decreased in temperature is led to a driving gas inlet of the gas turbine. Therefore, it can be expected to increase the service life of the components which constitute the gas turbine and are subjected to high temperature, such as a turbine blade.

Furthermore, the liquefied gas disposal system relating to the above-described first aspect may be configured such that the above-described jacket air undergoes heat exchange with a cooling medium via a heat exchange means for jacket air, and is led to the jacket part of the pressurized combustion means.

Thus, it is configured such that jacket air, which is subjected to heat exchange with a cooling medium (clear water, etc. which allows the improvement of system efficiency by utilizing a water supply of the turbine driving steam route to be described later) in the heat exchange means for jacket air, is led to the jacket part of the pressurized combustion means. For that reason, the heat insulation material to be provided on an outer surface of the jacket part of the pressurized combustion means for the protection from being burnt is obviated. Furthermore, a flame, which is created when vaporized liquefied gas is combusted in the furnace, heats the furnace wall, which constitutes the furnace, with the radiation heat thereof. However, the jacket air, which has undergone heat exchange in the heat exchange means for jacket air, is led to the jacket part covering the surrounding of the furnace wall. Therefore, it is possible to cool the furnace wall with the jacket air, thereby reducing the heat radiation loss from the pressurized combustion means. Therefore, it is possible to improve the heat exchanging efficiency of the high-pressure-side steam generation means to which flue gas led out from the pressurized combustion means is led.

Furthermore, the liquefied gas disposal system relating to the above-described configuration may be configured such that the furnace wall has a plurality of penetrating holes venting jacket air to the pressurized combustion means.

Thus, it is configured such that a plurality of penetrating holes is provided in the furnace wall constituting the furnace. As a result of this, the jacket air which has been led to the jacket part can cool the jacket itself while flowing into the furnace, and can be mixed with the dedicated combustion air to be used as combustion air for vaporized liquefied gas. Moreover, the flue gas temperature is also suppressed depending on the mixing between the combustion air and the jacket air. Since the temperature of the combustion air led to the gas turbine from the pressurized combustion means can be decreased, it is expected to increase the service life of the components which constitute the gas turbine and are subjected to high temperature, such as a turbine blade.

Furthermore, in the liquefied gas disposal system relating to the above-described first aspect, a power generation means and/or an electric motor may be provided on the shaft connecting between the compression means and the gas turbine.

Thus, it is configured such that a power generation means and/or an electric motor is provided on the shaft connecting between the gas turbine and the compression means. This makes it possible to recover surplus power as electric power when the power of the gas turbine which is driven by flue gas is higher than required power of the compression means.

Moreover, when used as an electric motor, it can serve as a power source for compressing vaporized liquefied gas and sending the gas to the furnace by driving the shaft and thereby rotationally driving the compression means. Therefore, even when power supply from the outside cannot be expected, the operation of compression combustion becomes possible, thereby increasing the redundancy.

Moreover, the liquefied gas disposal system relating to the first aspect comprises a low-pressure-side steam generation means for performing heat exchange with the flue gas, which has driven the gas turbine in a gas turbine downstream, wherein steam generated in the high-pressure-side steam generation means may be led to an inlet of the steam turbine, and steam generated in the low-pressure-side steam generation means may be led to a middle section of the steam turbine.

Thus, it is configured such that steam generated in the high-pressure-side steam generation means provided between the pressurized combustion means and the gas turbine is led to an inlet of the steam turbine, and steam generated in the low-pressure-side steam generation means provided in the downstream side of the gas turbine is led to a middle section of the steam turbine. This makes it possible to improve heat recovery efficiency in the entire liquefied gas disposal system, and improve the turbine efficiency of the steam turbine.

Moreover, the liquefied gas disposal system relating to the first aspect may be configured to comprise: a pressurizing means for pressurizing the liquefied gas which is vaporized and is to be led to the furnace; an electric motor for pressurizing means for driving the pressurizing means; and a power generation means for driving steam turbine, which generates power by being driven by the steam turbine, wherein the power generation means for driving steam turbine covers power demand of the entire liquefied gas disposal system, and when the pressure of the liquefied gas which is vaporized and is to be led to the pressurized combustion means is substantially atmospheric pressure, electric power of the power generation means provided in the compression means rather than electric power of the power generation means for driving steam turbine is preferentially sent to the electric motor for pressurizing means.

It is configured such that electric power of the power generation means provided on the common shaft with the compression means for compressing ambinent air, rather than the electric power of the power generation means for driving steam turbine, is preferentially sent to the electric motor for pressurizing means for driving the pressurizing means which pressurizes vaporized liquefied gas to be led to the pressurized combustion means. This makes it possible to supply power for driving the pressurizing means in separation from an external power distribution system without supplying power from the external power distribution system such as inboard electricity and electricity for facility use. Therefore, it is possible to improve the reliability of the combustion means more than before, thereby improving the reliability of the liquefied gas disposal system as well.

Moreover, in a liquefied gas carrier relating to a second aspect of the present invention, flue gas which is generated by combusting boil-off gas in the liquefied gas carrier with a pressurized combustion means is supplied to a gas turbine to rotate the gas turbine and drive a compression means connected to the rotary shaft of the gas turbine, so that air compressed by the compression means is supplied to the pressurized combustion means as jacket air and/or combustion air.

Moreover, in a liquefied gas storage facility relating to a third aspect of the present invention, flue gas which is generated by combusting boil-off gas in the liquefied gas storage facility with a pressurized combustion means is supplied to a gas turbine to rotate the gas turbine and drive a compression means connected to the rotary shaft of the gas turbine, so that air compressed by the compression means is supplied to the pressurized combustion means as jacket air and/or combustion air.

Furthermore, a method for controlling a liquefied gas disposal system relating to a fourth aspect of the present invention comprises a compression means for compressing ambinent air; a pressurized combustion means including: a furnace into which ambinent air compressed by the compression means is led as jacket air and combustion air and in which vaporized liquefied gas led out from a storage vessel combusts with the combustion air, and a jacket part which covers a surrounding of a furnace wall constituting the furnace and into which the jacket air is led; a high-pressure-side steam generation means for generating steam through heat exchange with the flue gas led out from the pressurized combustion means; a steam turbine to which the steam generated in the high-pressure-side steam generation means is led; and a gas turbine which is provided on a common shaft with the compression means, and is driven by the flue gas led from the high-pressure-side steam generation means, wherein the flue gas led from the pressurized combustion means is controlled to have a temperature according to a necessary output required by the gas turbine to drive the compression means.

### {Advantageous Effects of Invention}

According to the present invention, the configuration is such that ambinent air which is compressed by the compression means is led to the pressurized combustion means as the jacket air and the combustion air for the pressurized combustion means, wherein the compression means is provided on the common shaft with the gas turbine which is driven by the flue gas, and the flue gas is generated by combusting the vaporized liquefied gas by using the pressurized combustion means. This makes it possible to decrease the size of the furnace itself of the pressurized combustion means. Furthermore, in the present invention, since it is configured such that the pressurized combustion means is used as the combustion means for combusting the liquefied gas which is vaporized in the storage vessel, it is possible to increase the density of the flue gas which passes through the flue compared with a case of a conventional liquefied gas disposal system including a gas combustion boiler and a gas combustion furnace, which are based on atmospheric pressure combustion. Therefore, it is possible to increase the pressure difference between the inlet and outlet of the high-pressure-side steam generation means which performs heat exchange with the flue gas, thereby reducing the size of the high-pressure-side steam generation means compared with the conventional case. Thus, the liquefied gas disposal system can be made compact.

Furthermore, by using the high-pressure-side steam generation means of a reduced size and the pressurized combustion means in which the furnace is covered with the jacket air, it is made possible to reduce an area of heat insulation work in the liquefied gas disposal system, thereby suppressing heat radiation loss from the high-pressure-side steam generation means and the furnace.

Furthermore, flue gas, which has passed through the high-pressure-side steam generation means, thereby being decreased in temperature, is led to the inlet of the gas turbine. Therefore, it is possible to increase the service life of the components which constitute the gas turbine and are subjected to high temperature, such as a turbine blade.

### {Brief Description of Drawings}

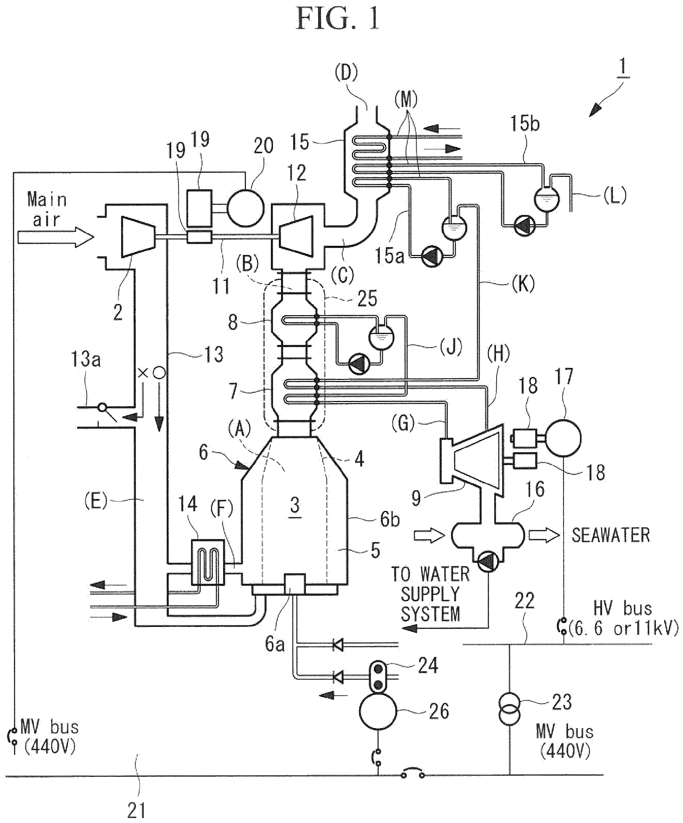

{Fig. 1}
   Figure 1 is a schematic diagram of a liquefied gas disposal system mounted on a liquefied natural gas carrier relating to an embodiment of the present invention.
{Fig. 2}
   Figure 2 is a graph showing heat recovery of flue gas and steam of the liquefied gas disposal system shown in Figure 1.

### {Description of Embodiments}

A liquefied gas disposal system of a liquefied natural gas carrier relating to an embodiment of the present invention will be described based on Figure 1.

Figure 1 shows a schematic diagram of a liquefied gas disposal system mounted on a liquefied natural gas carrier relating to an embodiment of the present invention.

A liquefied natural gas carrier (liquefied gas carrier), which is not shown, is principally provided with, as a liquefied gas disposal system 1 for combusting boil-off gas (vaporized liquefied gas) in a cargo tank (storage vessel) not shown for storing liquefied natural gas (liquefied gas), a compressor (compression means) 2 for suctioning and compressing air (ambinent air), a furnace 3 into which air compressed by the compressor 2 is led as dilution air (jacket air) and combustion air, and in which the boil-off gas led from the cargo tank combusts with combustion air, a pressurized combustion furnace (pressurized combustion means) 6 having a jacket part 5 which covers a surrounding of a furnace wall 4 constituting the furnace 3 and into which the dilution air is led, a high-pressure super heater (high-pressure-side steam generation means) 7 and a high-pressure evaporator (high-pressure-side steam generation means) 8 which generate high-pressure steam (steam) by performing heat exchange with flue gas led out from the pressurized combustion furnace 6, a steam turbine 9 into which the high-pressure steam generated or superheated in the high-pressure evaporator 8 and the high-pressure super heater 7 is led, and a gas turbine 12 which is provided on a common shaft with the compressor 2 and is driven by flue gas that has passed the high-pressure evaporator 8 and the high-pressure super heater 7.

The cargo tank stores liquefied natural gas which is a cargo in a liquid state under a pressure near the atmospheric pressure. As a result of heat influx into the cargo tank from outside, boil-off gas which has spontaneously evaporated is generated.

The pressurized combustion furnace 6 is a pressurizingtype combustion furnace in which compressed air compressed by the compressor 2 is led via an air duct 13 as combustion air. The combustion air led into the pressurized combustion furnace 6 is considered to be higher than the atmospheric pressure and in a range from the atmospheric pressure to about 4 atms.

The pressurized combustion furnace 6 is configured to have a substantially cylindrical shape in which the furnace 3 and the jacket part 5 which is provided to cover the outer periphery of the furnace 3 are formed into a substantially concentric shape. The furnace wall 4 is provided between the furnace 3 and the jacket part 5, and a plurality of penetrating holes is provided in the furnace wall 4. As a result of this, the furnace 3 and the jacket part 5 are brought into communication with each other.

A gas burner system 6a, which has a pilot-fuel-type burner (not shown) for generating a source fire and a main burner (not shown) for ejecting boil-off gas led from the cargo tank, is provided at an inlet (bottom part of the furnace 3 in Figure 1) of the furnace 3. For example, oil for ignition is supplied to the pilot-fuel-type burner, allowing the generation of a source fire. It is noted that gas (boil-off gas) such as liquefied natural gas may be supplied to the pilot-fuel-type burner, and a spark apparatus instead of the pilot-fuel-type burner may be provided.

A part of the compressed air which is branched from the air duct 13 is led to the jacket part 5 of the pressurized combustion furnace 6 as dilution air. The dilution air is subjected to heat exchange with clean water as a cooling medium (water led from a steam condenser 16 to be described below) in an air cooler (jacket air heat exchange means) 14 provided between the air duct 13 and the pressurized combustion furnace 6, and is decreased in temperature to, for example, near room temperature.

The remaining compressed air in the air duct 13 is led to the furnace 3 of the pressurized combustion furnace 6 as combustion air. The amount of air of combustion air is adjusted by an opening control valve (not shown) provided near the inlet of the pressurized combustion furnace 6. It is noted that a variable nozzle may be used in place of the opening control valve to adjust the amount of air. An ambinent air intake part 13a like a check valve for introducing backup air is provided in an intermediate part of the air duct 13.

The high-pressure super heater 7 provided downstream of the pressurized combustion furnace 6 is adapted to cause high-pressure steam and mixed steam, which are led from the high-pressure evaporator 8 and a water supply heater (low-pressure-side steam generation means) 15 to be describe later, to undergo heat exchange with flue gas.

In the high-pressure evaporator 8 provided in the downstream side of the high-pressure super heater 7, water heated in the water supply heater 15 undergoes heat exchange with flue gas to generate high-pressure steam.

The steam turbine 9 is a mixed pressure turbine which is driven in such a way that high-pressure steam which has been superheated by being passed through the high-pressure evaporator 8 and the high-pressure super heater 7 in that order is led to the inlet thereof, and mixed steam which has been superheated by being passed through the water supply heater 15 and the high-pressure super heater 7 in that order is led to the middle section thereof so that both steams are mixed (steam insertion mixing). The steam (exhaust) which has rotationally driven the steam turbine 9 is led to a steam condenser 16 to be recondensed. Such steam condenser 16 is suitably a vacuum condensation system of seawater cooling type, but may be an atmospheric condensation system.

Furthermore, the steam turbine 9 is provided with a shaft generator (power generation means for driving steam turbine) 17, which generates electric power by being rotationally driven by the steam turbine 9, via speed reducing gears 18. The electricity generated by the shaft generator 17 is supplied to a high-voltage power line 22 which is different from an external power distribution system (not shown). Here, the high-voltage power line 22 is configured to be electrically connectable to a middle-voltage power line 21 to which electric power is supplied from an electric motor/generator 20 to be described below via a transformer 23 as shown in Figure 1.

The gas turbine 12 is rotationally driven by flue gas which has undergone heat exchange in the high-voltage super heater 7 and the high-pressure evaporator 8, thereby being decreased in temperature. A rotary shaft (shaft) 11 is connected to the gas turbine 12, and the compressor 2 is connected to one end of the rotary shaft 11. Thus, as a result of the gas turbine 12 being rotationally driven by flue gas, the compressor 2 will suck and compress air.

Moreover, the electric motor/generator (the power generation means and/or the electric motor) 20 is provided on the rotary shaft 11 via a speed reducer 19. The electric motor/generator 20 serves as a power generator to generate power when the gas turbine 12 is driven, and serves as an electric motor by being reversely supplied with power when activating the liquefied gas disposal system 1, to drive the rotary shaft 11, thereby rotationally driving the compressor 2. It is noted that electric power generated by the electric motor/generator 20 via the gas turbine 12 is supplied to the middle-voltage power line 21 as shown in Figure 1. The power generation means may be configured such that the speed reduction mechanism is removed by integrating the electric motor/generator (power generation means and/or electric motor) 20 with the rotary shaft 11 without the speed reducer 19 interposed therebetween.

Water (supply water) condensed in the aforementioned steam condenser 16 is led to the water supply heater 15 provided in a downstream side of the gas turbine 12. In the water supply heater 15, a corrosion resistant fin tube is preferably used for the tubing (not shown) constituting it. This makes it possible to protect corrosion of the tube even when corrosive condensed water precipitates owing to a temperature decrease of flue gas at the an outlet of the water supply heater 15.

The water which has been led from the steam condenser 16 to the utmost downstream side of the water supply heater 15 undergoes heat exchange with flue gas, which is discharged from the gas turbine 12, thereby being increased in temperature, and is led to a water supply heater (not shown) such as a deaerator. The deaerator is adapted to perform water quality management by removing oxygen and non-condensable gas dissolved into the water whose temperature has been increased by the water supply heater 15 so that corrosion will not occur. The water whose temperature has been increased and which has been removed of oxygen and non-condensable gas by the deaerator is led to a mixed evaporator 15a, which is on the utmost upstream side of the water supply heater 15, a low-pressure evaporator 15b, which is provided between the mixed evaporator 15a and the utmost downstream side of the water supply heater 15, and a high-pressure evaporator 8.

The water which has been led to the mixed evaporator 15a undergoes heat exchange with the flue gas, which is led to the utmost upstream side of the water supply heater 15, thereby being turned into mixed steam. The water which has been led to the low-pressure evaporator 15b is subjected to heat exchange with the flue gas, which has passed the mixed evaporator 15a and whose temperature is decreased, thereby being turned into a low-pressure steam and used as inboard steam for miscellaneous use. Moreover, the supply water which has been led to the high-pressure evaporator 8 is subjected to heat exchange with the flue gas, which has passed the high-pressure super heater 7, thereby being turned into a high-pressure steam.

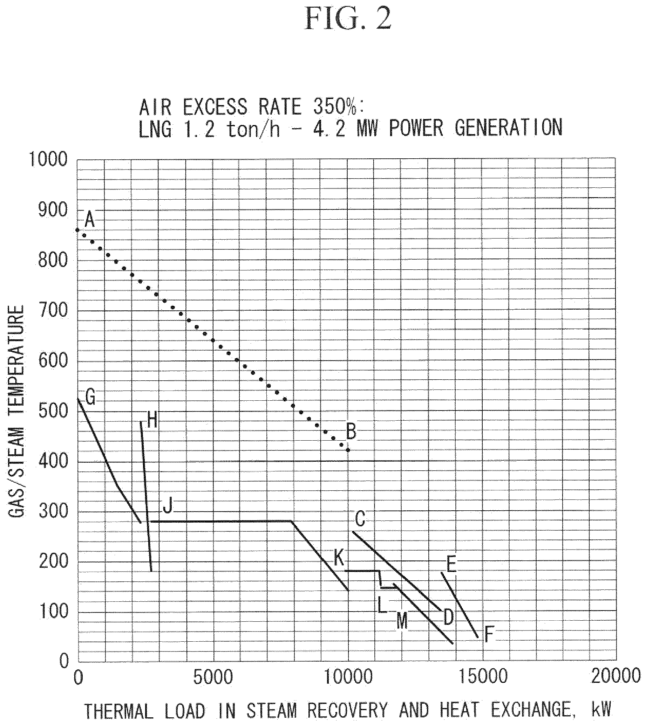

Next, the flow and the control method of the liquefied gas disposal system 1 will be described by using Figures 1 and 2. Figure 2 shows graphs of heat recovery between flue gas and steam in the liquefied gas disposal system 1 shown in Figure 1, in which the ordinate indicates temperature {K} of flue gas or steam, and the abscissa indicates thermal load {kW} in steam recovery and heat exchange.

As shown in Figure 1, as the compressor 2 is driven, the compressor 2 sucks and compresses air. The compressed air is compressed by the compressor 2 to have a pressure of 2 to 4 Bar, for example, and its temperature is increased to be, for example, 150°C ((E) of Figure 1 and point E in Figure 2). The compressed air whose temperature has increased is led to the air duct 13. A part of the compressed air which has been led to the air duct 13 is branched as dilution air and is led to an air cooler 14.

The high-temperature dilution air which has been led to the air cooler 14 may be subjected to heat exchange with water (supply water), which has been led from the steam condenser 16, to be decreased in temperature to near normal temperature ((F) of Figure 1 and point F in Figure 2). The dilution air whose temperature has been decreased is led to the jacket part 5 of the pressurized combustion furnace 6. The remaining high-temperature compressed air which has been led to the air duct 13 is supplied to the furnace 3 of the pressurized combustion furnace 6 as combustion air.

In the furnace 3, a fire source is formed by a pilot-fuel-type burner provided at the inlet of the furnace 3. Moreover, in the present embodiment, since the boil-off gas generated in the cargo tank has a substantially atmospheric pressure, the boil-off gas is boosted (pressurized) by a fuel gas boosting pump (pressurizing means) 24 to be supplied to the furnace 3, the fuel gas boosting pump 24 being driven by an electric motor for fuel gas boosting pump (electric motor for pressurizing means) 26 which is supplied with power from the middle-voltage power line 21. The boosted boil-off gas and the combustion air supplied from the air duct 13 are supplied to the furnace 3 and combusted to form a flame.

The dilution air, which has been led to the jacket part 5 through a vent hole provided in the furnace wall 4 and whose temperature has been decreased, flows into the furnace 3 in which a flame is formed. As a result of this, in the furnace 3, the combustion air and the dilution air are mixed so that the temperature of the combustion air is decreased. It is noted that the flow rate of the dilution air to be mixed with the combustion air is determined depending on power recovery rate in the gas turbine 12, the high-pressure super heater 7, the high-pressure evaporator 8, the water supply heater 15, and the steam turbine 9.

In this occasion, the combustion air which is supplied into the furnace 3 must be adjusted by the opening control valve provided at the inlet of the furnace 3 to have a required pressure difference (the difference in pressure between the dilution air and the combustion air) in which the pressure of the combustion air is lower than that of the dilution air. As a result of this, the inflow of dilution air flowing into the furnace 3 from the jacket part 5 via the vent hole of the furnace wall 4 will not be hindered.

Since such pressurized combustion furnace 6 has the jacket part 5 between the furnace 3 and an outer wall 6b of the pressurized combustion furnace 6, it is possible to suppress radiation heat (or radiation light) of a flame in the furnace 3 from being directly conducted to the outer wall 6b, thereby heating the outer wall 6b. Moreover, although the furnace wall 4 covering the furnace 3 is heated in temperature by the radiation heat of the flame, since dilution air whose temperature has been decreased is led to the jacket part 5, the furnace wall 4 is cooled by this heat of cooling. In this way, regarding the furnace wall 4, the shape and the number of vent holes are determined so as to be able to suppress the radiation heat of flames from being directly conducted to the outer wall 6b, thereby heating the outer wall 6b, and a material suitable for the temperature is selected.

The temperature of the flue gas generated in the pressurized combustion furnace 6 will be, for example, about 860°C ((A) of Figure 1 and point A in Figure 2) as a result of the combustion of boil-off gas with combustion air mixed with dilution air. This flue gas is discharged from the furnace 3 and is led to the high-pressure super heater 7.

The flue gas which has been led to the high-pressure super heater 7 undergoes heat exchange with high-pressure steam led from the high-pressure evaporator 8 ((J) of Figure 1 and point J in Figure 2) and mixed steam led from the mixed evaporator 15a of the water supply heater 15 ((K) of Figure 1 and point K in Figure 2) in that order, thereby turning each of them into superheated high-pressure steam or mixed steam. The flue gas, which has undergone heat exchange with high-pressure steam and mixed steam, thereby being decreased in temperature, is discharged from the high-pressure super heater 7 and is led to the high-pressure evaporator 8. The flue gas, which has been led to the high-pressure evaporator 8, undergoes heat exchange with water, which has been passed from the water supply heater 15 via the deaerator to be increased in temperature, to generate a high-pressure steam.

As a result of passing through the high-pressure super heater 7 and the high-pressure evaporator 8, the flue gas which has been led out from the pressurized combustion furnace 6 is decreased in temperature to, for example, about 420°C as shown by a dotted line in Figure 2 ((B) of Figure 1 and point B of the dotted line in Figure 2) and is also decreased in pressure. It is noted that the degree of temperature decrease of the flue gas which has passed through the high-pressure super heater 7 and the high-pressure evaporator 8 is considered to be a range in which the gas turbine 12 can output necessary power to enable the super charger 2, which is connected to the gas turbine 12 via the rotary shaft 11, to compress air.

Here, the flue gas which has been led from the pressurized combustion furnace 6 has a higher density and a higher pressure compared with flue gas which is led out from a conventional combustion furnace (not shown). As a result of this, in the high-pressure super heater 7 and the high-pressure evaporator 8, through which the flue gas passes, it is possible to increase the pressure difference of flue gas between the pressures at the inlet and outlet. For that reason, it is possible to reduce the sizes of the high-pressure super heater 7 and the high-pressure evaporator 8. It is noted that in the high-pressure super heater 7 and the high-pressure evaporator 8, through which the flue gas passes, heat protection work is provided on the outer periphery 25 thereof.

The flue gas, which has passed through the high-pressure super heater 7 and the high-pressure evaporator 8, thereby being decreased in temperature, is led to the gas turbine 12. The flue gas, which has been led to the gas turbine 12, acts on turbine blades (not shown) provided on the gas turbine 12 to rotationally drive the gas turbine 12. The rotary shaft 11 is rotationally driven by the gas turbine 12 which is rotationally driven by flue gas being led thereinto. As a result of the rotary shaft 11 being rotationally driven, the compressor 2 provided at the one end of the rotary shaft 11 is driven to suck and compress air. Furthermore, since the electric motor/generator 20 is connected onto the rotary shaft 11 via the speed reducer 19, rotationally driving the rotary shaft 11 causes the electric motor/generator 20 to generate power.

The flue gas which has rotationally driven the gas turbine 12 ((C) of Figure 1 and point C in Figure 2) is led out from the gas turbine 12 with the outlet temperature thereof being, for example, not less than 130°C, and preferably not less than 200°C. In this way, it is necessary to prevent acid water corrosion, which is caused by dew condensation of the flue gas which has passed through the high-pressure super heater 7 and the high-pressure evaporator 8, thereby being decreased in temperature, and thereby protect the gas turbine 12 by adjusting the outlet temperature of the gas turbine 12 to be not less than 130 to 160°C.

The flue gas which has been led to the water supply heater 15 from the gas turbine 12 passes through the mixed evaporator 15a and the low-pressure evaporator 15b of the water supply heater 15 in that order to heat the water which has been led from the steam condenser 16 (M in Figure 2), and thereafter is discharged to outside the liquefied gas disposal system 1 from a funnel (not shown), etc. It is noted that the discharge temperature of the flue gas to be discharged from the water supply heater 15 is preferably not more than 100°C ((D) of Figure 1 and point D in Figure 2). This makes it possible to increase the total thermal efficiency of the liquefied gas disposal system 1.

On the other hand, water whose temperature is increased by the flue gas ((M) of Figure 1 and point M in Figure 2) is led to the high-pressure evaporator 8 or the mixed evaporator 15a or the low-pressure evaporator 15b of the water supply heater 15 via the deaerator not shown. The water which has been led to the mixed evaporator 15a of the water supply heater 15 and increased in temperature, undergoes heat exchange with the flue gas to be turned into mixed steam ((K) of Figure 1 and point K in Figure 2) and is led to the high-pressure super heater 7. The mixed steam which has been led to the high-pressure super heater 7 undergoes heat exchange with the flue gas, thereby being superheated ((H) of Figure 1 and point H in Figure 2), and is led to the middle section of the steam turbine 9.

Moreover, high pressure steam which has been passed from the deaerator through the high-pressure evaporator 8 and superheated by the high pressure super heater 7 is led to the inlet of the steam turbine 9 ((G) of Figure 1 and point G in Figure 2). The steam turbine 9 is rotated by those superheated high-pressure steam and mixed steam to drive the shaft generator 17.

It is noted that the water which has been led to the low-pressure evaporator 15b of the water supply heater 15 and whose temperature has been increased, undergoes heat exchange with the flue gas ((L) of Figure 1 and point L in Figure 2) and is turned into a low-pressure steam to be supplied as inboard steam for miscellaneous use.

As so far described, according to the liquefied gas disposal system 1 relating to the present embodiment, a control method therefor, and a liquefied natural gas carrier provided therewith, the following operational effects can be achieved.

According to the present embodiment, the configuration is such that air (ambinent air) which is compressed by the compressor (compression means) 2 is led to the pressurized combustion furnace 6 as the dilution air (jacket air) and the combustion air, wherein the compressor 2 is provided on a common shaft with the gas turbine 12 which is driven by the flue gas, and the flue gas is generated by combusting boil-off gas (vaporized liquefied natural gas (liquefied gas)) by using the pressurized combustion furnace (pressurized combustion means) 6. This makes it possible to reduce the size of the furnace 3 itself of the pressurized combustion furnace 6. Furthermore, since the pressurized combustion furnace 6 is used as the combustion means for combusting the boil-off gas generated in the cargo tank (storage vessel), it is possible to increase the density of the flue gas that passes through the high-pressure super heater (steam generation means) 7 and the high-pressure evaporator (steam generation means) 8 compared with the case of a conventional liquefied gas disposal system (not shown) including a gas combustion boiler (not shown) and a gas combustion furnace (not shown), which are based on atmospheric pressure combustion. This makes it possible to reduce the sizes of the high-pressure evaporator 8 and the high-pressure super heater 7 compared with a heat exchanger for atmospheric pressure flue gas. Therefore, it is possible to reduce the size of the liquefied gas disposal system 1.

Furthermore, by using the high-pressure evaporator 8 and the high-pressure super heater 7, which are decreased in size, and the pressurized combustion furnace 6 in which the furnace 3 is covered with the jacket part 5 into which the dilution air is led, it is made possible to reduce the area of heat insulation work in the liquefied gas disposal system 1 and suppress heat radiation loss from the outer periphery 25 of the high-pressure evaporator 8 and the high-pressure super heater 7, and the furnace 3.

Furthermore, flue gas which has passed through the high-pressure evaporator 8 and the high-pressure super heater 7, thereby being decreased in temperature, is led to the inlet of the gas turbine 12. Therefore, it is possible to increase the service life of the components which constitute the gas turbine 12 and are subjected to high temperature.

It is configured such that the dilution air which has been subjected to heat exchange with supply water (cooling medium), which is led from the steam condenser 16, in the air cooler (heat exchange means for jacket air) 14 is led to the jacket part 5 of the pressurized combustion furnace 6. As a result of this, the heat insulation material to be provided on the outer wall 6b of the jacket part 5 of the pressurized combustion furnace 6 is obviated. Furthermore, a flame, which is created when the boil-off gas is combusted in the furnace 3, heats the furnace wall 4, which constitutes the furnace 3, with radiation heat thereof. However, dilution air which has undergone heat exchange in the air cooler 14 and whose temperature is decreased is led to the jacket part 5 which covers the surrounding of the furnace wall 4. Thereby, it is possible to reduce the heat radiation loss from the pressurized combustion furnace 6 by cooling the furnace wall 4 with dilution air. Thus, it is possible to improve the heat exchanging efficiency of the high-pressure evaporator 8 and the high-pressure super heater 7, to which the flue gas led out from the pressurized combustion furnace 6 is led.

Furthermore, it is configured such that a plurality of penetrating holes (not shown) is provided in the furnace wall 4 constituting the furnace 3. As a result of this, the dilution air which has been led to the jacket part 5 flows into the furnace 3 so that the dilution air in addition to the combustion air can be used for combustion with the boil-off gas. Therefore, it is possible to mix the combustion air with the dilution air which has undergone heat exchange in the air cooler 14 and whose temperature is decreased, thereby decreasing the temperature of the flue gas to be generated. Since the temperature of the combustion air, which is led to the gas turbine 12 from the pressurized combustion furnace 6, can be reduced, it is possible to increase the service life of the components, which constitute the gas turbine 12 and are subjected to high temperature, such as a turbine blade (not shown).

It is also configured such that an electric motor/generator (power generation means and/or electric motor) 20 is provided on the rotary shaft 11 which connects between the gas turbine 12 and the compressor 2. This makes it possible to recover excess power as electric power when the power of the gas turbine 12 which is driven by the flue gas is higher than required power of the compressor 2, and supply it to the middle-voltage power line 21.

Moreover, when the electric motor/generator 20 is used as an electric motor, it is possible to drive the rotary shaft 11 to rotationally drive the compressor 2, thereby compressing and sending activation air, which is needed for activating the pressurized combustion furnace 6, with the compressor 2. Therefore, facilities such as an electric fan (not shown) for activation air when activating the pressurized combustion furnace 6 are obviated.

It is further configured such that the high-pressure steam, which is generated in the high-pressure evaporator 8 provided between the pressurized combustion furnace 6 and the gas turbine 12, is superheated by the high-pressure super heater 7 and is led to the inlet of the steam turbine 9, so that mixed steam, which is generated in the mixed evaporator 15a of the water supply heater (low-pressure-side steam generation means) 15 provided on the downstream side of the gas turbine 12, is superheated by the high-pressure evaporator 8 and is led to the middle section of the steam turbine 9. This makes it possible to improve the heat recovery efficiency in the entire liquefied gas disposal system 1, and also improve the turbine efficiency of the steam turbine 9.

Furthermore, it is configured such that power is transmitted to the electric motor for fuel gas boosting pump (electric motor for pressurizing means) 26 for driving the fuel gas boosting pump (pressurizing means) 24 which boosts (pressurizes) the boil-off gas led to the pressurized combustion furnace 6 from the shaft generator (power generation means for driving steam turbine) 17 which generates power by being driven by the gas turbine 20 via the high-voltage power line 22 and the transformer 23. Thereby, the power for driving the fuel gas boosting pump 24 can be supplied in separation from an external power distribution system (not shown) by transmitting electricity from the electric power of the shaft generator 17 connected to the steam turbine 9. Therefore, it is possible to improve the reliability of the pressurized combustion furnace 6 more than before, and also improve the reliability of the liquefied gas disposal system 1.

It is noted that although the steam turbine 9 has been described as a mixed turbine in the present embodiment, the present invention may be configured, without being limited to that, such that a low-pressure turbine and a high-pressure turbine are disposed on a common shaft.

Furthermore, although the description has been made such that two routes of steams including the high-pressure steam and the mixed steam are led to the steam turbine 9, it is also possible to adopt only one route in which steam is led from the high-pressure evaporator 8 and the high-pressure super heater 7 to the steam turbine 9, or more than two routes.

Furthermore, the liquefied gas disposal system 1 relating to the present invention is applicable not only to liquefied natural gas carriers, but also applicable to liquefied natural gas storage facilities (not shown) for storing liquefied natural gas.

Moreover, although description has been made by using liquefied natural gas as the liquefied gas, the present invention will not be limited to this, and the liquefied gas may be liquefied petroleum gas (LPG), ethane gas, ethylene gas, ammonia gas, and mixtures thereof.

Furthermore, it is generally considered that when the original pressure of the boil-off gas supplied to the pressurized combustion furnace 6 is secured by a cargo compressor (not shown) which is provided on the cargo tank side, and the like, the pressure of the boil-off gas which is led out by the cargo compressor from the cargo tank is generally higher than the pressure in the furnace 3. Therefore, in such a case, the boil-off gas may be simply decreased in pressure and supplied into the furnace 3 without boosting the boil-off gas with the fuel gas boosting pump 24.

### {Reference Signs List}

1 Liquefied gas disposal system
2 Compression means (Compressor)
3 Furnace
4 Furnace wall
5 Jacket part
6 Pressurized combustion means (pressurized combustion furnace)
7 High-pressure-side steam generation means (high-pressure super heater)
8 High-pressure-side steam generation means (high-pressure evaporator)
9 Steam turbine
11 Shaft (rotary shaft)
12 Gas turbine

## Claims

1. A liquefied gas disposal system (1), comprising:
a compression means (2) for compressing ambient air;
a pressurized combustion means (6) including:
a furnace (3) into which ambient air compressed by the compression means (2) is led as jacket air and combustion air and in which vaporized liquefied gas led out from a storage vessel combusts with the combustion air, and
a jacket part (5) which covers a surrounding of a furnace wall (4) constituting the furnace (3) and into which the jacket air is led;
an opening control valve which is provided near an inlet of the furnace (3) and adjusts the pressure of the combustion air so that the pressure of the combustion air supplied to the furnace (3) is lower than the pressure of the jacket air supplied to the furnace (3);
a high-pressure-side steam generation means (7, 8) for generating steam through heat exchange with the flue gas which is led out from the pressurized combustion means (6);
a steam turbine (9) to which the steam generated in the high-pressure-side steam generation means (7, 8) is led;
a gas turbine (12) which is provided on a common shaft (11) with the air compression means (2), and is rotated by the flue gas led from the high-pressure-side steam generation means (7, 8); and
an electric motor/generator (20) which is driven by the gas turbine (12), wherein
the electric motor/generator (20) serves as a power generator to generate power when the gas turbine (12) is driven, and serves as an electric motor by being reversely supplied with power when activating the liquefied gas disposal system (1), to rotationally drive the compression means (2).

2. The liquefied gas disposal system according to claim 1, wherein
the jacket air undergoes heat exchange with a cooling medium via a heat exchange means for jacket air (14), and is led to the jacket part of the pressurized combustion means (6).

3. The liquefied gas disposal system according to claim 2, wherein
the furnace wall (4) has a plurality of penetrating holes venting jacket air to pressurized combustion means (6).

4. The liquefied gas disposal system according to any one of claims 1 to 3, wherein
a power generation means and/or an electric motor (20) may be provided on the shaft (11) connecting between the compression means (2) and the gas turbine (12).

5. The liquefied gas disposal system according to any one of claims 1 to 4, comprising
a low-pressure-side steam generation means (15) for performing heat exchange with the flue gas, which has driven the gas turbine (12), downstream of the gas turbine (12), wherein
steam generated in the high-pressure-side steam generation means (7, 8) is led to an inlet of the steam turbine (9), and steam generated in the low-pressure-side steam generation means (15) is led to a middle section of the steam turbine (9).

6. The liquefied gas disposal system according to any one of claims 1 to 5, comprising:
a pressurizing means (24) for pressurizing the liquefied gas which is vaporized and is to be led to the furnace (3);
an electric motor for pressurizing means (26) for driving the pressurizing means (24); and
a power generation means for driving steam turbine (17), which generates power by being driven by the steam turbine (9), wherein
the power generation means for driving steam turbine (17) covers power demand of an entire liquefied gas disposal system (1), and
when a pressure of the liquefied gas which is vaporized and is to be led to the pressurized combustion means (6) is substantially atmospheric pressure, power of the power generation means provided in the compression means (2), rather than power of the power generation means for driving steam turbine (17), is preferentially sent to the electric motor for pressurizing means (26).

7. A liquefied gas carrier provided with the liquefied gas disposal system (1) according to any one of claims 1 to 6, in which flue gas which is generated by combusting boil-off gas in the liquefied gas carrier with a pressurized combustion means (6) is supplied to a gas turbine (12) to rotate the gas turbine (12) and drive a compression means (2) connected to a rotary shaft (11) of the gas turbine (12), so that air compressed by the compression means (2) is supplied to the pressurized combustion means (6) as jacket air and/or combustion air.

8. A liquefied gas storage facility provided with the liquefied gas disposal system (1) according to any one of claims 1 to 6, in which flue gas which is generated by combusting boil-off gas in the liquefied gas storage facility with a pressurized combustion means (6) is supplied to a gas turbine (12) to rotate the gas turbine (12) and drive a compression means (2) connected to a rotary shaft (11) of the gas turbine (12), so that air compressed by the compression means (2) is supplied to the pressurized combustion means (6) as jacket air and/or combustion air.

9. A method for controlling a liquefied gas disposal system according to claim 1, comprising:
a compression means (2) for compressing ambient air;
a pressurized combustion means (6) including: a furnace (3) into which ambient air compressed by the compression means (2) is led as jacket air and combustion air and in which vaporized liquefied gas led out from a storage vessel combusts with the combustion air, and a jacket part (5) which covers a surrounding of a furnace wall (4) constituting the furnace (3) and into which the jacket air is led;
an opening control valve which is provided near an inlet of the furnace (3) and adjusts the pressure of the combustion air so that the pressure of the combustion air supplied to the furnace (3) is lower than the pressure of the jacket air supplied to the furnace (3);
a high-pressure-side steam generation means (7, 8) for generating steam through heat exchange with the flue gas led out from the pressurized combustion means (6);
a steam turbine (9) to which the steam generated in the high-pressure-side steam generation means (7, 8) is led; and
a gas turbine (12) which is provided on a common shaft (11) with the compression means (2), and is driven by the flue gas led from the high-pressure-side steam generation means (7, 8), wherein
the flue gas led from the pressurized combustion means (6) is controlled to have a temperature in accordance with a necessary output required by the gas turbine (12) to drive the compression means (2).

## Patentansprüche

1. Flüssiggasentsorgungssystem (1), umfassend:
ein Verdichtungsmittel (2) zum Verdichten von Umgebungsluft;
ein Überdruckverbrennungsmittel (6), enthaltend:
einen Ofen (3), welchem Umgebungsluft, die mittels des Verdichtungsmittels (2) verdichtet worden ist, als Mantelluft und Verbrennungsluft zugeführt wird, und in welchem verdampftes Flüssiggas, das aus einem Lagerbehälter abgeführt worden ist, zusammen mit der Verbrennungsluft verbrannt wird, und
einen Mantelbereich (5), welcher eine Umgebung einer den Ofen (3) bildenden Ofenwand (4) bedeckt und welchem die Mantelluft zugeführt wird;
ein Öffnungssteuerventil, welches in der Nähe eines Einlasses des Ofens (3) bereitgestellt ist und welches den Druck der Verbrennungsluft derart reguliert, dass der Druck der dem Ofen (3) zugeführten Verbrennungsluft niedriger ist als der Druck der dem Ofen (3) zugeführten Mantelluft;
ein Hochdruckseite-Dampferzeugungsmittel (7, 8) zum Erzeugen von Dampf durch Wärmeaustausch mit dem Abgas, welches aus dem Überdruckverbrennungsmittel (6) abgeführt wird;
eine Dampfturbine (9), welcher der in dem Hochdruckseite-Dampferzeugungsmittel (7, 8) erzeugte Dampf zugeführt wird;
eine Gasturbine (12), welche auf einer gemeinsamen Welle (11) mit dem Luftverdichtungsmittel (2) bereitgestellt ist und welche von dem aus dem Hochdruckseite-Dampferzeugungsmittel (7, 8) abgeführten Abgas in Rotation versetzt wird; und
einen Elektromotor/Generator (20), welcher von der Gasturbine (12) angetrieben wird, wobei
der Elektromotor/Generator (20) beim Betreiben der Gasturbine (12) als Stromerzeuger zum Erzeugen von Strom dient, und beim Aktivieren des Flüssiggasentsorgungssystems als Elektromotor zum Drehantreiben des Verdichtungsmittels (2) dient, indem er in umgekehrter Weise mit Strom versorgt wird.

2. Flüssiggasentsorgungssystem nach Anspruch 1, wobei die Mantelluft über ein Wärmeaustauschmittel für Mantelluft (14) einen Wärmeaustausch mit einem Kühlmedium vollzieht und dem Mantelbereich (5) des Überdruckverbrennungsmittels (6) zugeführt wird.

3. Flüssiggasentsorgungssystem nach Anspruch 2, wobei die Ofenwand (4) eine Vielzahl an Durchgangslöchern aufweist, über welche Mantelluft in das Überdruckverbrennungsmittel (6) gelangt.

4. Flüssiggasentsorgungssystem nach einem der Ansprüche 1 bis 3, wobei ein Stromerzeugungsmittel und/oder ein Elektromotor (20) an der das Verdichtungsmittel (2) mit der Gasturbine (12) verbindenden Welle (11) bereitgestellt sein kann.

5. Flüssiggasentsorgungssystem nach einem der Ansprüche 1 bis 4, umfassend:
ein Niederdruckseite-Dampferzeugungsmittel (15) zum Vollziehen eines Wärmeaustausches mit dem Abgas, mittels welchem die Gasturbine (12) angetrieben worden ist, stromabwärts der Gasturbine (12), wobei
in dem Hochdruckseite-Dampferzeugungsmittel (7, 8) erzeugter Dampf einem Einlass der Dampfturbine (9) zugeführt wird, und in dem Niederdruckseite-Dampferzeugungsmittel (15) erzeugter Dampf einem Mittelabschnitt der Dampfturbine (9) zugeführt wird.

6. Flüssiggasentsorgungssystem nach einem der Ansprüche 1 bis 5, umfassend:
ein Verdichtungsmittel (24) zum Verdichten des Flüssiggases, welches verdampft und dem Ofen (3) zugeführt wird;
einen Elektromotor für Verdichtungsmittel (26) zum Antreiben des Verdichtungsmittels (24); und
ein Stromerzeugungsmittel für Antriebsdampfturbine (17), welches Strom dadurch erzeugt, dass es von der Dampfturbine (9) angetrieben wird, wobei
das Stromerzeugungsmittel für Antriebsdampfturbine (17) den Strombedarf des gesamten Flüssiggasentsorgungssystems (1) deckt, und
wenn der Druck des Flüssiggases, welches verdampft wird und dem Überdruckverbrennungsmittel (6) zugeführt werden soll, im Wesentlichen Atmosphärendruck entspricht, vorzugsweise Strom des in dem Verdichtungsmittel (2) bereitgestellten Stromerzeugungsmittels anstelle von Strom des Stromerzeugungsmittels für Antriebsdampfturbine (17) zu dem Elektromotor für Verdichtungsmittel (26) geleitet wird.

7. Flüssiggasträger, welcher mit dem Flüssiggasentsorgungssystem (1) nach einem der Ansprüche 1 bis 6 ausgerüstet ist und in welchem Abgas, das durch Verbrennen von Abdampfgas in dem Flüssiggasträger mit einem Überdruckverbrennungsmittel (6) erzeugt worden ist, einer Gasturbine (12) zugeführt wird, um die Gasturbine (12) in Rotation zu versetzen und um ein mit einer Drehwelle der Gasturbine (12) verbundenes Verdichtungsmittel (2) anzutreiben, so dass Luft, welche mittels des Verdichtungsmittels (2) verdichtet worden ist, dem Überdruckverbrennungsmittel (6) als Mantelluft und/oder Verbrennungsluft zugeführt wird.

8. Flüssiggaslagereinrichtung, welche mit dem Flüssiggasentsorgungssystem (1) nach einem der Ansprüche 1 bis 6 ausgerüstet ist und in welchem Abgas, das durch Verbrennen von Abdampfgas in der Flüssiggaslagervorrichtung mit einem Überdruckverbrennungsmittel (6) erzeugt worden ist, einer Gasturbine (12) zugeführt wird, um die Gasturbine (12) in Rotation zu versetzen und um ein mit einer Drehwelle der Gasturbine (12) verbundenes Verdichtungsmittel (2) anzutreiben, so dass Luft, welche mittels des Verdichtungsmittels (2) verdichtet worden ist, dem Überdruckverbrennungsmittel (6) als Mantelluft und/oder Verbrennungsluft zugeführt wird.

9. Verfahren zum Regulieren eines Flüssiggasentsorgungssystems (1) nach Anspruch 1, umfassend:
ein Verdichtungsmittel (2) zum Verdichten von Umgebungsluft;
ein Überdruckverbrennungsmittel (6), enthaltend: einen Ofen (3), welchem Umgebungsluft, die mittels des Verdichtungsmittels (2) verdichtet worden ist, als Mantelluft und Verbrennungsluft zugeführt wird, und in welchem verdampftes Flüssiggas, das aus einem Lagerbehälter abgeführt worden ist, zusammen mit der Verbrennungsluft verbrannt wird, und einen Mantelbereich (5), welcher eine Umgebung einer den Ofen (3) bildenden Ofenwand (4) bedeckt und welchem die Mantelluft zugeführt wird;
ein Öffnungssteuerventil, welches in der Nähe eines Einlasses des Ofens (3) bereitgestellt ist und welches den Druck der Verbrennungsluft derart reguliert, dass der Druck der dem Ofen (3) zugeführten Verbrennungsluft niedriger ist als der Druck der dem Ofen (3) zugeführten Mantelluft;
ein Hochdruckseite-Dampferzeugungsmittel (7, 8) zum Erzeugen von Dampf durch Wärmeaustausch mit dem Abgas, welches aus dem Überdruckverbrennungsmittel (6) abgeführt wird;
eine Dampfturbine (9), welcher der in dem Hochdruckseite-Dampferzeugungsmittel (7, 8) erzeugte Dampf zugeführt wird; und
eine Gasturbine (12), welche auf einer gemeinsamen Welle (11) mit dem Verdichtungsmittel (2) bereitgestellt ist und welche von dem aus dem Hochdruckseite-Dampferzeugungsmittel (7, 8) abgeführten Abgas angetrieben wird, wobei
das aus dem Überdruckverbrennungsmittel (6) abgeführte Abgas derart reguliert wird, dass dessen Temperatur mit einer von der Gasturbine (12) zum Betreiben des Verdichtungsmittels (2) benötigten Ausgangsleistung übereinstimmt.

## Revendications

1. Système de traitement de gaz liquéfié (1), comprenant:
un moyen de compression (2) pour comprimer l'air ambiant ;
un moyen de combustion sous pression (6) comprenant:
un four (3) dans lequel de l'air ambiant comprimé par le moyen de compression (2) est dirigé sous forme d'air d'enveloppe et d'air de combustion et dans lequel du gaz liquéfié vaporisé dirigé vers l'extérieur depuis une cuve de stockage est brûlé avec l'air de combustion, et
une partie enveloppe (5) qui recouvre une périphérie d'une paroi de four (4) constituant le four (3) et dans laquelle l'air d'enveloppe est dirigé;
une soupape de commande d'ouverture qui est placée à proximité d'une entrée du four (3) et qui règle la pression de l'air de combustion pour que la pression de l'air de combustion fourni au four (3) soit inférieure à la pression de l'air d'enveloppe fourni au four (3);
un moyen de génération de vapeur côté haute pression (7, 8) pour générer de la vapeur par échange de chaleur avec le gaz de combustion qui est dirigé vers l'extérieur depuis le moyen de combustion sous pression (6);
une turbine à vapeur (9) vers laquelle la vapeur générée dans le moyen de génération de vapeur côté haute pression (7, 8) est dirigée;
une turbine à gaz (12) qui est présente sur un arbre (11) commun avec le moyen de compression d'air (2), et est mise en rotation par le gaz de combustion dirigé depuis le moyen de génération de vapeur haute pression (7, 8); et
un moteur/générateur électrique (20) qui est entraîné par la turbine à gaz (12), dans lequel
le moteur/générateur électrique (20) sert de générateur de puissance pour générer de la puissance lorsque la turbine à gaz (12) est entraînée, et sert de moteur électrique lorsqu'il est à l'inverse alimenté en puissance lors de l'activation du système de traitement de gaz liquéfié (1), pour entraîner en rotation le moyen de compression (2).

2. Système de traitement de gaz liquéfié selon la revendication 1, dans lequel l'air d'enveloppe subit un échange de chaleur avec un milieu de refroidissement par le biais d'un moyen d'échange de chaleur pour l'air d'enveloppe (14), et est dirigé vers la partie enveloppe du moyen de combustion sous pression (6).

3. Système de traitement de gaz liquéfié selon la revendication 2, dans lequel la paroi de four (4) est dotée d'une pluralité d'orifices pénétrants évacuant l'air d'enveloppe vers le moyen de combustion sous pression (6).

4. Système de traitement de gaz liquéfié selon l'une quelconque des revendications 1 à 3, dans lequel un moyen de génération de puissance et/ou un moteur électrique (20) peut être placé sur l'arbre (11) reliant le moyen de compression (2) et la turbine à gaz (12).

5. Système de traitement de gaz liquéfié selon l'une quelconque des revendications 1 à 4, comprenant un moyen de génération de vapeur côté basse pression (15) pour effectuer un échange de chaleur avec le gaz de combustion, qui a entraîné la turbine à gaz (12), en aval de la turbine à gaz (12), dans lequel la vapeur générée dans le moyen de génération de vapeur côté haute pression (7, 8) est dirigée vers une entrée de la turbine à vapeur (9), et la vapeur générée dans le moyen de génération de vapeur côté basse pression (15) est dirigée vers une partie intermédiaire de la turbine à vapeur (9).

6. Système de traitement de gaz liquéfié selon l'une quelconque des revendications 1 à 5, comprenant:
un moyen de pressurisation (24) pour mettre sous pression le gaz liquéfié qui est vaporisé et doit être dirigé vers le four (3);
un moteur électrique pour le moyen de pressurisation (26) pour entraîner le moyen de pressurisation (24); et
un moyen de génération de puissance pour entraîner la turbine à vapeur (17) qui génère de la puissance en étant entraîné par la turbine à vapeur (9), dans lequel
le moyen de génération de puissance pour entraîner la turbine à vapeur (17) couvre la demande de puissance de la totalité d'un système de traitement de gaz liquéfié (1), et
lorsqu'une pression du gaz liquéfié qui est vaporisé et doit être dirigé vers le moyen de combustion sous pression (6) est sensiblement la pression atmosphérique, la puissance du moyen de génération de puissance fournie dans le moyen de compression (2), plutôt que la puissance du moyen de génération de puissance pour entraîner la turbine à vapeur (17), est de préférence envoyée vers le moteur électrique pour le moyen de pressurisation (26).

7. Transporteur de gaz liquéfié doté du système de traitement de gaz liquéfié (1) selon l'une quelconque des revendications 1 à 6, dans lequel le gaz de combustion qui est généré par la combustion du gaz d'évaporation dans le transporteur de gaz liquéfié avec un moyen de combustion sous pression (6) est fourni à une turbine à gaz (12) pour faire tourner la turbine à gaz (12) et entraîner un moyen de compression (2) relié à un arbre rotatif (11) de la turbine à gaz (12), de sorte que l'air comprimé par le moyen de compression (2) est fourni au moyen de combustion sous pression (6) sous forme d'air d'enveloppe et/ou d'air de combustion.

8. Installation de stockage de gaz liquéfié dotée du système de traitement de gaz liquéfié (1) selon l'une quelconque des revendications 1 à 6, dans laquelle le gaz de combustion qui est généré par la combustion du gaz d'évaporation dans l'installation de stockage de gaz liquéfié dotée d'un moyen de combustion sous pression (6) est fourni à une turbine à gaz (12) pour faire tourner la turbine à gaz (12) et entraîner un moyen de compression (2) relié à un arbre rotatif (11) de la turbine à gaz (12), de sorte que l'air comprimé par le moyen de compression (2) est fourni au moyen de combustion sous pression (6) sous forme d'air d'enveloppe et/ou d'air de combustion.

9. Procédé de commande d'un système de traitement de gaz liquéfié (1) selon la revendication 1, comprenant :
un moyen de compression (2) pour comprimer l'air ambiant ;
un moyen de combustion sous pression (6) comprenant : un four (3) dans lequel l'air ambiant comprimé par le moyen de compression (2) est dirigé sous forme d'air d'enveloppe et d'air de combustion et dans lequel le gaz liquéfié vaporisé dirigé vers l'extérieur depuis une cuve de stockage brûle avec l'air de combustion, et une partie enveloppe (5) qui recouvre une périphérie d'une paroi de four (4) constituant le four (3) et dans laquelle l'air d'enveloppe est dirigé ;
une soupape de commande d'ouverture qui est placée à proximité d'une entrée du four (3) et règle la pression de l'air de combustion de sorte que la pression de l'air de combustion fourni au four (3) est inférieure à la pression de l'air d'enveloppe fourni au four (3);
un moyen de génération de vapeur côté haute pression (7, 8) pour générer de la vapeur par un échange de chaleur avec le gaz de combustion dirigé vers l'extérieur depuis le moyen de combustion sous pression (6);
une turbine à vapeur (9) vers laquelle la vapeur générée dans le moyen de génération de vapeur côté haute pression (7, 8) est dirigée; et
une turbine à gaz (12) qui est présente sur un arbre (11) commun avec le moyen de compression (2), et est entraînée par le gaz de combustion dirigé depuis le moyen de génération de vapeur côté haute pression (7, 8), dans lequel le gaz de combustion dirigé depuis le moyen de combustion sous pression (6) est commandé pour avoir une température conformément à une sortie nécessaire requise par la turbine à gaz (12) pour entraîner le moyen de compression (2).
